# FASCICULE DE BREVET EUROPEEN

(11) **EP 0 851 326 B1**
(45) Date de publication et mention de la délivrance du brevet: **13.02.2002**
(21) Numéro de dépôt: 97403076.9
(22) Date de dépôt: 18.12.1997
(51) Int. Cl.: G05B 19/042

(54) **Circuit de test pour entrée de signal d'un équipement industriel et en particulier pour équipement à entrées multiples**
Testkreis für ein Eingangssignal eines industriellen Gerätes und insbesondere für Geräte mit mehreren Eingängen
Test circuit for an input signal of a piece of industrial equipment and particularly for equipment with multiple inputs

(30) Priorité: 23.12.1996 FR 9615841
(43) Date de publication de la demande: 01.07.1998
(73) Titulaire: ALCATEL, 75008 Paris (FR)
(72) Inventeur: Piron, Patrick, L'Isle D'Abeau 38090 (FR)
(74) Mandataire: Gosse, Michel

(56) Documents cités:
- FR-A- 2 444 742
- US-A- 4 631 693
- US-A- 5 081 571

## Description

L'invention concerne un circuit de test pour entrée de signal d'un équipement industriel et en particulier d'un équipement à entrées multiples recevant des signaux se traduisant par la présence ou l'absence d'une tension continue

De nombreux équipements industriels, notamment de type automate, comportent un ensemble d'entrées dont au moins certaines, souvent en nombre important, sont conçues pour recevoir des signaux qui se traduisent par la présence ou l'absence d'une tension continue

Les exploitants de ces équipements désirent souvent qu'il soit possible de vérifier automatiquement leur bon fonctionnement ce qui implique l'adjonction de circuits de test susceptibles de permettre la réalisation de ces vérifications Ces circuits doivent préférablement être simples, peu encombrants et peu coûteux tout en étant efficaces et fiables

Il existe ainsi des circuits permettant à de tester les entrées d'un équipement recevant des signaux se traduisant par la présence ou l'absence d'une tension continue qui pour différentes raisons et notamment pour des raisons de coût sont conçus pour effectuer des tests des entrées d'un équipement par groupe, ce qui implique que ces entrées soient simultanément disponibles en cours d'exploitation de l'équipement De plus il ne faut pas qu'il puisse y avoir un mode commun de défaut en cas de défaillance de circuit de test.

L'invention propose donc un circuit de test pour au moins une première entrée d'un équipement industriel recevant sur au moins chaque première entrée des signaux se traduisant par la présence ou l'absence d'une première tension continue, ledit circuit de test étant doté de moyens lui permettant d'appliquer une seconde tension continue dite de test à chaque première entrée en l'absence de la première tension continue sous le contrôle d'un agencement de commande de l'équipement

Selon une caractéristique de l'invention, le circuit de test comporte des moyens convertisseurs de tension alternative en tension continue qui sont individuellement affectés à chaque première entrée pour permettre d'appliquer à cette première entrée une seconde tension continue de test obtenue à partir d'une même tension alternative de valeur et de fréquence déterminées pour toutes les dites première entrées et qui reçoivent cette tension alternative par l'intermédiaire de moyens de transmission électriquement séparateurs permettant d'éviter une rupture d'isolement entre entrées

Selon une caractéristique de l'invention, les moyens convertisseurs sont connectés à ladite entrée parallèlement aux moyens permettant d'appliquer ladite première tension continue à cette entrée, la transmission de cette première tension étant interruptible par l'intermédiaire de moyens commutateurs

L'invention, ses caractéristiques et ses avantages sont précisés dans la description qui suit en liaison avec la figure évoquée ci-dessous

La figure unique présente un schéma d'un circuit de test selon l'invention

Le circuit de test 1 présenté est destiné à équiper une entrée, telle l'entrée E, donnant accès à un organe 2 d'un équipement industriel à entrées et/ou sorties de signaux tel que par exemple un automate comportant usuellement une pluralité d'entrées de commande identiques ou similaires pilotées par un agencement de commande 4 organisé par exemple autour d'une logique à microcontrôleur non représentée, certaines au moins des entrées de commande, telle E, étant pilotées en courant continu et par tout ou rien.

L'entrée E comporte ici des moyens permettant d'isoler électriquement l'organe 2 commandé de l'agencement de commande 4, pour des raisons de sécurité Cette isolation est par exemple réalisée à l'aide d'un photocoupleur 5 comportant une diode électroluminescente 6, dont l'alimentation est contrôlée par l'agencement de commande 4, et un montage organisé autour d'au moins un transistor de sortie 7 La base de ce transistor de sortie est commandée par le signal lumineux produit par la diode électroluminescente 6, lorsque celle-ci est alimentée Une tension de commande Vc est alors produite en sortie du montage au profit de l'organe 2, par exemple entre deux bornes d'un condensateur 8 inséré d'une part en parallèle entre l'émetteur et le collecteur du transistor de sortie 7 et d'autre part en série avec une résistance 9 entre les bornes d'alimentation respectivement référencées 0 et V+ du montage évoqué ci-dessus La borne 0 est par exemple une borne de masse de l'équipement. La tension continue de commande Vc fournie à l'organe 2 via les bornes A et B est produite lorsque l'émission lumineuse de la diode électroluminescente 6 est commandée par le passage d'un courant continu approprié, ici supposé fourni par l'agencement de commande 4 via deux bornes C0 et C1, en phase de commande de l'organe 2.

Une possibilité de test individuel de l'entrée E est obtenue par l'intermédiaire du circuit de test 1 proposé par l'invention qui permet d'agir de manière alternative par rapport à la commande normale ici supposée obtenue via les bornes C0, C1 de l'agencement de commande 4.

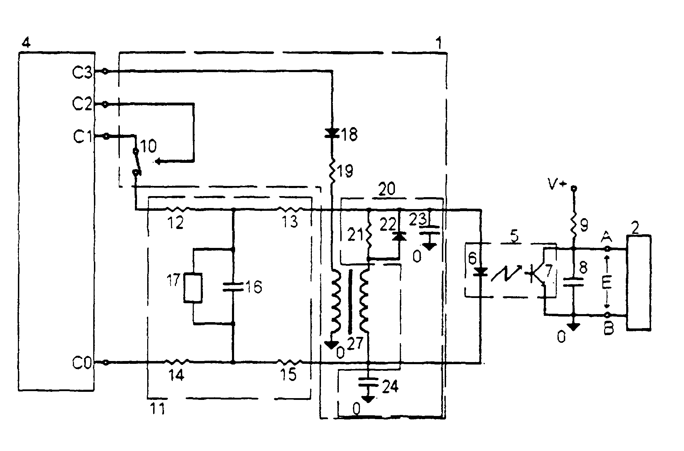

A cet effet, le circuit de test 1 comporte des moyens lui permettant d'empêcher la transmission d'une commande normale à l'entrée E de l'organe 2 Ces moyens sont par exemple constitués par un organe commutateur 10, ici symbolisé par un contact, de type repos, inséré entre la borne C1 de l'agencement de commande 4 et l'anode de la diode électroluminescente 6, l'ouverture de la liaison établie à travers cet organe commutateur 10 étant commandée par l'agencement de commande 4, en phase de test, celui-ci étant supposé agir sur l'organe commutateur 10, via une borne de commande C2 dans le cas de l'exemple de réalisation proposé en figure 1

Un montage quadripolaire symétrique d'entrée 11 relie ici les bornes C0, C1 de l'agencement de commande 4 aux bornes de la diode électroluminescente 6, via l'organe commutateur 10 en ce qui concerne ici la liaison unissant l'anode de la diode 6 à la borne C0 Ce montage d'entrée 11 comporte ici deux résistances 12 et 13 en série entre l'organe commutateur 10 et l'anode de la diode électroluminescente 6 évoquée ci-dessus, deux résistances 14 et 15 en série entre la borne C0 et la cathode de cette diode électroluminescente 6 et un condensateur 16 inséré en parallèle avec un composant anti-surtension 17 entre les points respectivement communs l'un aux résistances 12, 13 et l'autre aux résistances 14, 15

Le dispositif anti-surtension 17, qui est par exemple une diode de type transil, est destiné à protéger la diode électroluminescente 6 vis-à vis des surtensions susceptible d'apparaître en entrée de montage. Les résistances 12 à 14 permettant une limitation des éventuelles surcharges susceptibles de s'appliquer au dispositif anti-surtension. Le condensateur 16 assure un filtrage d'entrée vis-à-vis des parasites éventuels

Selon l'invention, des moyens sont prévus pour fournir une tension alternative Vt de fréquence et de valeur déterminées au circuit de test 1 en phase de test. Ces moyens sont ici supposés faire partie de l'agencement de commande 4 qui les pilote par exemple par l'intermédiaire de sa logique, celle-ci commandant par exemple la mise en ou hors-service d'un classique circuit générateur fournissant sur commande la tension alternative Vt Cette dernière est ici supposée appliquée entre une borne de masse de l'installation et une borne C3 de l'agencement de commande, elle est aussi supposée fournie, lorsque la liaison de commande normale établie par l'intermédiaire de l'organe commutateur 10 est ouverte

Des moyens de transmission électriquement séparateurs ici constitués par un transformateur d'isolement 27 sont alimentés par la tension Vt qui est donc appliquée ici entre les deux extrémités d'un enroulement primaire du transformateur, l'une des extrémités étant ici supposée reliée à une borne de masse de l'installation, alors que l'autre est reliée à la borne C3, via un montage classique comportant une diode 18 et une résistance 19 en série.

L'application de la tension Vt aux bornes du primaire du transformateur 27 entraîne l'apparition d'une tension alternative correspondante entre les bornes l'enroulement secondaire de ce même transformateur 1 qui sont ici reliées à des moyens de conversion de tension alternative en tension continue permettant de produire une tension continue de test, lorsque la tension Vt est appliquée Dans la réalisation envisagée, une tension continue de test de l'entrée 2 de l'équipement industriel est obtenue par l'intermédiaire de moyens de conversion 20 qui viennent se connecter aux bornes de la diode électroluminescente 6 de manière à lui appliquer la tension continue V= qu'ils produisent

A cet effet les extrémités de l'enroulement secondaire du transformateur 27 sont ici reliées l'une à l'anode de la diode électroluminescente 6 par l'intermédiaire d'une résistance 21 et d'une diode 22 montées en parallèle et l'autre à la cathode de la diode électroluminescente 6

Deux condensateurs 23 et 24 sont respectivement connectés d'une part l'un à l'anode et l'autre à la cathode de la diode électroluminescente 6 par une borne et d'autre part ici à une borne de masse pour compléter le montage convertisseur de tension alternative en tension continue évoqué ci-dessus de manière à éliminer les parasites

Comme déjà indiqué, le circuit selon l'invention est plus particulièrement destiné à équiper des équipements industriels comportant un nombre important d'entrées recevant des signaux se traduisant par la présence ou l'absence d'une tension continue déterminé, dans la mesure où il permet de tester toutes ces entrées à l'aide d'un signal fourni sous la forme d'une tension sinusoïdale unique sans que l'isolement entre entrées ne soit rompu.

## Revendications

1. Circuit de test pour au moins une première entrée (E) d'un équipement industriel recevant sur au moins chaque première entrée des signaux se traduisant par la présence ou l'absence d'une première tension continue (Vc), ledit circuit de test étant doté de moyens lui permettant d'appliquer une seconde tension continue (V=) dite de test à chaque première entrée en l'absence de la première tension continue (Vc) sous le contrôle d'un agencement de commande (4) de l'équipement, **caractérisé en ce que** ledit circuit comporte des moyens (20) convertisseurs de tension alternative en tension continue qui sont individuellement affectés à chaque première entrée pour permettre d'appliquer à cette première entrée une seconde tension continue de test (V=) obtenue à partir d'une même tension alternative (Vt) de valeur et de fréquence déterminées pour toutes les dites première entrées et qui reçoivent cette tension alternative (Vt) par l'intermédiaire de moyens de transmission (27) électriquement séparateurs.

2. Circuit de test, selon la revendication 1, **caractérisé en ce que** les moyens convertisseurs (20) sont connectés à ladite entrée parallèlement aux moyens (11) permettant d'appliquer ladite première tension continue (Vc) a cette entrée, la transmission de cette première tension étant interruptible par l'intermédiaire de moyens commutateurs (10).

## Claims

1. A test circuit for testing at least a first input (E) of an industrial equipment unit receiving on at least each first input signals taking the form of the presence or the absence of a first direct current voltage, said test circuit being provided with means enabling it to apply a test second direct current voltage to each first input in the absence of the first direct current voltage under the control of a control system (4) of the equipment unit, **characterized in that** said circuit includes converter means (20) for converting an alternating current voltage to a direct current voltage individually assigned to each first input to enable application to that first input of a test second direct current voltage obtained from the same alternating current voltage of particular value and frequency for all said first inputs and that receive said alternating current voltage via electrically isolating transmission means (27).

2. A test circuit according to claim 1, **characterized in that** the converter means (20) are connected to said input in parallel with the means (11) for applying said first direct current voltage to that input, transmission of said first voltage being interruptible by switching means (10).

## Patentansprüche

1. Testkreis für wenigstens einen ersten Eingang (E) eines industriellen Gerätes, das an wenigstens jedem ersten Eingang Signale empfängt, die sich im Vorhandensein oder Nichtvorhandensein einer ersten Gleichspannung (Vc) ausdrücken, wobei der Testkreis mit Mitteln ausgestattet ist, die es ihm ermöglichen, eine zweite, so genannte Test-Gleichspannung (V=) an jeden ersten Eingang bei Nichtvorhandensein der ersten Gleichspannung (Vc) unter der Kontrolle einer Steueranordnung (4) des Gerätes anzulegen, **dadurch gekennzeichnet, dass** der Kreis Mittel (20) zum Wandeln von Wechselspannung in Gleichspannung umfasst, die individuell jedem ersten Eingang zugeordnet sind, um das Anlegen einer zweiten Test-Gleichspannung (V=), die aus einer für alle ersten Eingänge gleichen Wechselspannung (Vt) von festgelegtem Wert und Frequenz erhalten wird, zu ermöglichen, und die diese Wechselspannung (Vt) über elektrisch trennende Übertragungsmittel (27) empfangen.

2. Testkreis nach Anspruch 1, **dadurch gekennzeichnet, dass** die Wandlermittel (20) an den Eingang parallel zu den Mitteln (11) zum Anlegen der ersten Gleichspannung (Vc) an diesen Eingang geschaltet sind, wobei die Übertragung dieser ersten Spannung über Schaltmittel (10) unterbrechbar ist.
